# EUROPÄISCHE PATENTSCHRIFT

(11) **EP 1 086 623 B1**
(45) Veröffentlichungstag und Bekanntmachung des Hinweises auf die Patenterteilung: **11.12.2002**
(21) Anmeldenummer: 00114585.3
(22) Anmeldetag: 07.07.2000
(51) Int. Cl.: A01K 31/16

(54) **Legenestanordnung für Geflügel, umfassend wenigstens ein Gehäuse**
Laying nest for poultry, including at least one housing
Pondoir pour volailles, avec au moins une unité de pondoir

(30) Priorität: 23.09.1999 DE 29916752 U
(43) Veröffentlichungstag der Anmeldung: 28.03.2001
(73) Patentinhaber: Big Dutchman International GmbH, 49377 Vechta (DE)
(72) Erfinder: Müller, Günter, 49632 Essen (DE)
(74) Vertreter: Jabbusch, Matthias

(56) Entgegenhaltungen:
- FR-A- 2 365 951
- US-A- 5 058 530

## Beschreibung

Die Erfindung betrifft eine Legenestanordnung für Geflügel, umfassend wenigstens ein Gehäuse mit zumindestens eine Durchtrittsöffnung für das Geflügel aufweisenden Gehäusewänden und mit wenigstens einem Gehäuseboden und umfassend eine an einem Gehäusebodenrand entlanggeführte Abtransporteinrichtung für gelegte Eier, wobei der Gehäuseboden eine Neigung in Richtung der Abtransporteinrichtung aufweist.

Legenestanordnungen dieser Gattung werden insbesondere in Großstallanlagen für Geflügel, zum Beispiel für Legehennen, installiert, um auf industrielle Weise die von dem Geflügel zu legenden Eiern zu erfassen und abzutransportieren. Mit dem Gehäuse der Legenestanordnung wird für das Geflügel eine Örtlichkeit zum Legen der Eier bereitgestellt. Das Gehäuse bildet dabei beispielsweise einen geschlossenen Raum aus, in den das Geflügel durch wenigstens eine Durchtrittsöffnung in einer der Wände des Gehäuses gelangen kann. Auf den Boden dieses Gehäuses gelegte Eier rollen aufgrund ihrer Form und der Neigung des Gehäusebodens den Boden hinab. Sie rollen dabei in die Abtransporteinrichtung, weil die Neigung des Gehäusebodens in Richtung der Abtransporteinrichtung verläuft. Die Abtransporteinrichtung ist beispielsweise ein Förderband, das von dem Gehäuseboden abrollende Eier aufnimmt und aus der Legenestanordnung heraustransportiert.

Der Gehäuseboden ist häufig durch Exkremente des Geflügels, Futterreste, Federn und dergleichen verschmutzt, so daß bei zu geringer Neigung des Gehäusebodens Eier auf dem Gehäuseboden aufgrund seiner durch die Verschmutzungen hergestellten unebenen Oberfläche liegenbleiben. Damit die Eier mittels der ihre Rollbewegung bewirkenden Schwerkraft die Unebenheiten überwinden können und auf die Abtransporteinrichtung rollen, wird bei bekannten Legenestanordnungen eine größere Neigung des Gehäusebodens eingestellt. Vgl. z.B. die Druckschrift FR-A-2365951 Nachteilig dabei ist, daß die Eier aufgrund der größeren Neigung des Gehäusebodens mit höherer Geschwindigkeit hinabrollen. Diese höhere Geschwindigkeit entsteht insbesondere dann, wenn der Rollweg aufgrund eines breit bzw. tief ausgebildeten Gehäusebodens relativ lang ist. Im Ergebnis kann auf nachteilige Weise eintreten, daß hinabrollende Eier mit einer hohen Geschwindigkeit auf der Abtransporteinrichtung einrollen und dort am Ende des Rollweges gegen Hindernisse, wie beispielsweise eine seitliche Begrenzung eines Förderbandes oder bereits auf der Abtransporteinrichtung liegende Eier, prallen. Infolge dabei auftretender Stöße werden Kräfte auf die Schalen der Eier ausgeübt, wodurch es regelmäßig zu Haarrissen in den Schalen und häufig auch zum Zerbrechen der Schalen kommt. Beschädigte Eier können nicht verwertet werden, insbesondere wegen einer verringerten Haltbarkeit nicht an den Nahrungsmittelhandel abverkauft werden. Auf nachteilige Weise ist eine hohe Ausschußrate bei der Eierproduktion gegeben.

Der Erfindung liegt die Aufgabe zugrunde, eine Legenestanordnung der eingangs genannten Gattung aufzuzeigen, die eine Reduzierung der Ausschußrate gewährleistet.

Diese Aufgabe ist erfindungsgemäß dadurch gelöst, daß der Gehäuseboden aus wenigstens zwei Bodenplatten ausgebildet ist, die zueinander um eine parallel zur Längserstreckung der Abtransporteinrichtung ausgerichtete und in der Ebene des Gehäusebodens verlaufende Schwenkachse schwenkbar sind, und daß wenigstens ein eine separate Schwenkung jeder Bodenplatte bewirkendes Schwenkorgan vorgesehen ist.

Bei der erfindungsgemäßen Legenestanordnung ist der Gehäuseboden nicht einstückig ausgebildet, sondern in durch Bodenplatten gebildete Abschnitte unterteilt. Beispielsweise kann der Gehäuseboden in zwei Bodenplatten geteilt sein, die in einer Ebene liegen und dadurch insgesamt den Gehäuseboden ausbilden. Beide Bodenplatten sind zueinander schwenkbar, d.h., eine Bodenplatte kann gegenüber der anderen Bodenplatte geschwenkt werden. Die Schwenkachse liegt in der Ebene des Gehäusebodens. Dadurch ist sichergestellt, daß auch bei einem Schwenken der Bodenplatten zueinander weiterhin ein Gehäuseboden ausgebildet bleibt. Dieser ist dadurch gekennzeichnet, daß er aus zwei Abschnitten mit verschiedenen Neigungen bzw. Schrägstellungen zur Abtransporteinrichtung hin bestehen kann.

Ist eine Bodenplatte gegenüber der anderen geschwenkt, so weist sie eine andere Neigung bezüglich der Umgebung des Gehäusebodens, insbesondere bezüglich der Abtransporteinrichtung, auf. Die Neigung kann insbesondere steiler sein, so daß auf dieser Bodenplatte eventuell bereits liegengebliebene Eier wieder zum Abrollen gebracht werden. Die andere Bodenplatte kann dagegen eine geringere Neigung aufweisen. Auf diese Bodenplatte können die Eier von der Bodenplatte mit größerer Neigung rollen, wodurch mit Vorteil erreicht ist, daß die Eier auf dieser Bodenplatte aufgrund der geringeren Neigung ausrollen und nicht weiter beschleunigt werden, wie es bei einem Gehäuseboden mit durchgängig größerer Neigung der Fall ist. Dieses quasi Bremsen erfolgt durch die Reibung der Eier an dieser Bodenplatte, dem Rollwiderstand, dem eine geringere Vortriebskraft aufgrund der geringeren Neigung entgegenwirkt. Es ist somit vorteilhaft verhindert, daß die hinabrollenden Eier eine derartige Rollgeschwindigkeit erreichen, die bei einer Kollision dieser Eier mit Hindernissen oder anderen Eiern zu mechanischen Beschädigungen ihrer Schalen führen würde.

Sind die Eier von der einen Bodenplatte mit größerer Neigung auf die andere Bodenplatte mit geringerer Neigung gerollt, kann auch diese Bodenplatte unabhängig von "der anderen Bodenplatte mit einem Schwenkorgan steiler angestellt werden. Es erfolgt damit eine Vergrößerung der Neigung dieser Bodenplatte, die jedoch nicht zugleich mit der Vergrößerung der Neigung der ersten Bodenplatte, sondern zum Beispiel anschließend erfolgt.

Bei der erfindungsgemäßen Legenestanordnung ist somit ein Gehäuseboden vorhanden, der nicht einheitlich angestellt wird. Vielmehr erfolgt jeweils ein Vergrößern der Neigung von zueinander separaten Abschnitten des Gehäusebodens, den Bodenplatten, in Richtung der Abtransporteinrichtung. Das Vergrößern der Neigungen erfolgt vorzugsweise in einer zeitlichen Abfolge, so daß hinabrollende Eier wie auf einer Welle bewegt werden. Es erfolgt jeweils ein Abrollen von einer Bodenplatte mit steilerer Neigung auf die nächstfolgende Bodenplatte, die noch eine geringere Neigung aufweist, woraufhin die Neigung dieser Bodenplatte vergrößert wird, so daß ein Ei dort nicht liegenbleiben kann und ein weiteres Abrollen erfolgt. Durch die geringeren Neigungen der Bodenplatten, auf die die Eier zunächst rollen, werden die Eier abgebremst, so daß Beschädigungen der Eier deutlich reduziert werden und somit die Ausschußrate sinkt.

Aufgrund der Ausrichtung der Schwenkachse zwischen den Bodenplatten parallel zur Längserstreckung der Abtransporteinrichtung ist eine Anstellung der einzelnen Bodenplatten in einer Reihenfolge möglich, die sicherstellt, daß die Eier schonend zur Abtransporteinrichtung geführt werden. Dazu wird zunächst die Bodenplatte steiler angestellt, die der Abtransporteinrichtung am entferntesten ist. Alternativ kann diese Bodenplatte ständig steil angestellt sein. Von dieser Bodenplatte können die Eier dann auf eine Bodenplatte rollen, die der Abtransporteinrichtung näher ist. Durch fortlaufendes steileres Anstellen dieser und gegebenenfalls weiterer Bodenplatten können die Eier schließlich zur Abtransporteinrichtung rollen, da sie stets dann immer wieder abgebremst werden, wenn das Erreichen einer zu hohen Abrollgeschwindigkeit droht.

Ein weiterer Vorteil der erfindungsgemäßen Legenestanordnung ist es, daß aufgrund der kontrollierten Abrollbewegungen der Eier erreichbar ist, daß ein Gehäuseboden mit größerer Breite, d.h. Tiefe in Richtung der Abtransporteinrichtung, herstellbar ist. Diese größere Breite würde bei bekannten Legenestanordnungen dazu führen, daß die Eier über den langen Rollweg eine zu hohe Geschwindigkeit erfahren. Bei der erfindungsgemäßen Legenestanordnung tritt vorteilhaft keine hohe Geschwindigkeit der Eier auf, weil sie durch die verschieden geneigten Bodenplatten des Gehäusebodens jeweils im Verlauf des Rollweges abgebremst werden. Durch die größere Breite kann aber vorteilhaft eine größere Anzahl von zum Beispiel Legehennen gleichzeitig in der Legenestanordnung eingestallt sein, wodurch mit wesentlichem Vorteil eine Erhöhung der Eiproduktion erreichbar ist.

Die separaten Bodenplatten des Gehäusebodens können in einer Ebene frei nebeneinander angeordnet sein. Es ist aber auch möglich, die Bodenplatten miteinander durch wenigstens ein Gelenk, zum Beispiel ein Scharnier, zu verbinden, so daß ihr gegenseitiges Schwenken weiterhin hergestellt ist und durch das Scharnier bzw. durch die Scharniere oder dergleichen Gelenkmittel geführt ist.

Zum separaten Schwenken jeder Bodenplatte kann vorgesehen sein, daß für jede Bodenplatte ein einzelnes Schwenkorgan vorhanden ist. Als Schwenkorgan kann beispielsweise jeweils ein Hebel oder ein Arbeitszylinder dienen, der separat an einer Bodenplatte in ihre Schwenkung bewirkender Weise angreift. Diese Schwenkorgane können beispielsweise ausgehend von der Bodenplatte, die der Abtransporteinrichtung für die Eier am entferntesten ist, nacheinander betätigt werden, so daß nacheinander die Neigungen der Bodenplatten vergrößert werden. Alternativ kann vorgesehen sein, daß für zwei einander benachbarte Bodenplatten ein gemeinsames Schwenkorgan vorgesehen ist. Auch mit einem Schwenkorgan kann das separate Schwenken dieser beiden Bodenplatten erreicht werden, wenn das Schwenkorgan zunächst an einer Bodenplatte in ihre Neigung verändernden Weise angreift und nachfolgend entsprechend an der zweiten Bodenplatte angreift.

Nach einer Weiterbildung der Erfindung ist vorgesehen, daß der Gehäuseboden um eine Kippachse kippbar gelagert ist, daß die Kippachse einem einer Durchtrittsöffnung angenäherten Rand des Gehäusebodens zugeordnet ist und daß ein Kippantrieb vorgesehen ist. Nach dieser Weiterbildung ist der Gehäuseboden nicht nur in sich durch die verschiedenen Bodenplatten schwenkbar, sondern auch insgesamt um eine Kippachse kippbar. Diese Kippachse ist dem Rand des Gehäusebodens zugeordnet, der der Durchtrittsöffnung bzw. mehreren Durchtrittsöffnungen in einer Gehäusewand angenähert ist. Wird der Gehäuseboden um diese Kippachse gekippt, so wird der Gehäuseboden von innen gegen die Durchtrittsöffnungen geführt. Diese werden dadurch verschlossen, mit dem Vorteil, daß in dieser Stellung des Gehäusebodens kein Zutritt für das Geflügel in die Legenestanordnung gegeben ist. Dadurch ist vorteilhaft erreicht, daß zum Beispiel in Ruhezeiten das Geflügel nicht in die Legenestanordnung gelangen kann und diese insbesondere durch Exkremente verschmutzt. Durch diese Maßnahme wird somit erreicht, daß eine Verschmutzung des Gehäusebodens und eine daraus resultierende Unebenheit seiner Oberfläche vermindert wird. Zugleich werden durch das Kippen des Gehäusebodens Verschmutzungen von seiner Oberfläche dadurch entfernt, daß sie von dem sich etwa in senkrechter Kipplage befindlichen Gehäuseboden herabrieseln. Das Kippen des Gehäusebodens erfolgt mit einem auf geeignete Weise ausgebildeten Kippantrieb. Dieser kann separat gegenüber den Schwenkorganen für die Bodenplatten ausgebildet sein.

Durch die erfindungsgemäße Ausbildung des Gehäusebodens ist mit besonderem Vorteil verhindert, daß auf dem Gehäuseboden liegengebliebene Eier durch ein Kippen des Gehäusebodens aus der Legenestanordnung herausgeschleudert werden. Die erfindungsgemäße Ausbildung des Gehäusebodens ermöglicht vorteilhaft, vor dem Kippen des Gehäusebodens auf den Bodenplatten des Gehäusebodens liegengebliebene Eier in der beschriebenen Weise schonend zur Abtransporteinrichtung zu bewegen.

In einer besonderen konstruktiven Ausführung der Erfindung umfaßt der Kippantrieb eine seitlich am Gehäuseboden vorbeigeführte Zugstange, deren freies Ende unterhalb des Gehäusebodens angeordnet ist und an dem das Schwenkorgan beispielsweise für zwei einander benachbarte Bodenplatten angeordnet ist. Bei dieser Ausführung sind auf vorteilhafte Weise die Schwenkorgane in den Kippantrieb integriert. Durch eine Betätigung des Kippantriebes kann dadurch zugleich eine Betätigung der Schwenkorgane und ein Kippen des Gehäusebodens erfolgen. Der konstruktive Aufbau wird aufgrund der Zusammenfassung beider Bewegungsantriebe und der damit verbundenen Einsparung von Bauteilen vereinfacht. Das Gehäuse der erfindungsgemäßen Legenestanordnung ist vorzugsweise auf einem Rahmengestell angeordnet, so daß unter dem Gehäuseboden ein Bauraum für die Anordnung eines Schwenkorgans vorhanden ist. Das Schwenkorgan ist am freien Ende der Zugstange unterhalb des Gehäusebodens angeordnet, wodurch auf vorteilhafte Weise gewährleistet ist, daß die Oberfläche des Gehäusebodens, die für das Geflügel zugänglich ist, frei von Bauteilen des Schwenkorgans ist. Diese sind unterhalb des Gehäusebodens angeordnet und greifen von unten an dem Gehäuseboden, nämlich an seinen einzelnen Bodenplatten an. Mit der Zugstange wird auf das Schwenkorgan eine Zugkraft ausgeübt, die nach oben gerichtet ist. Über diese Zugkraft wird ein Kippen des Gehäusebodens insgesamt bewirkt, wobei zugleich ermöglicht ist, daß die einzelnen Bodenplatten des Gehäusebodens nacheinander in eine jeweils größere Neigungslage gebracht werden.

Dabei ist das Schwenkorgan nach einer Weiterbildung der Erfindung als etwa dreieckige Auflageplatte ausgebildet und am freien Ende der Zugstange unterhalb des Gehäusebodens schwenkbar angelenkt, wobei eine Seite der dreieckigen Auflageplatte als Auflagekante für zwei Bodenplatten ausgebildet ist. Bei einer Bewegung der Zugstange nach oben wird die Auflageplatte aufgrund ihrer Anlenkung an der Zugstange gleichfalls nach oben bewegt. Dabei greift sie von unten an dem Gehäuseboden an. Aufgrund ihrer schwenkbaren Anlenkung an der Zugstange kann sich die Auflageplatte dabei zunächst in einer Schwenklage befinden, in der ihre Auflagekante an einer der beiden Bodenplatten angreift. Diese Bodenplatte ist von der Abtransporteinrichtung für die Eier weiter entfernt als die andere Bodenplatte. Sie ist vorzugsweise vor einem Bewegen der Zugstange nach oben steiler angestellt, weshalb Eier von dieser Bodenplatte auf die andere Bodenplatte abrollen können. Bei einem Anheben der Zugstange greift die Auflagekante der dreieckigen Auflageplatte auch an der anderen Bodenplatte an und vergrößert dabei deren Neigung in Bezug auf die Ebene der Abtransporteinrichtung. Die auf dieser Bodenplatte liegenden Eier können von dieser auf die Abtransporteinrichtung abrollen.

Um sicher zu gewährleisten, daß die Bodenplatten nacheinander geschwenkt werden, um ihre Neigung zu verändern, ist vorgesehen, daß die Auflagekante der etwa dreieckigen Auflageplatte ausgehend von der Mitte ihrer Längserstreckung beidseitig Abschrägungen aufweist. Die Abschrägungen treten mit den Unterseiten der Bodenplatten in anliegende Wechselwirkung. Aufgrund der Schwenkbarkeit der dreieckigen Auflageplatte und aufgrund der Abschrägungen ist dabei sichergestellt, daß zunächst eine Anlage der einen abgeschrägten Seite der Auflagekante an eine Bodenplatte auftritt, bevor auch die andere abgeschrägte Seite der Auflagekante an die benachbarte Bodenplatte angelegt wird. Die Abschrägungen sind dabei jeweils kontinuierlich ausgebildet, so daß jeder abgeschrägte Auflagekantenabschnitt gerade ausgebildet ist.

Damit die Zugstange eine Zugbewegung nach oben ausführen kann, umfaßt der Kippantrieb einen Schwenkhebel, an dessen einem freien Ende die Zugstange schwenkbar angelenkt ist und an dessen anderem freien Ende ein Kraftübertragungsmittel angreift. Mit dem Kraftübertragungsmittel ist der Schwenkhebel in eine Schwenkbewegung versetzbar, im Zuge der das freie Ende des Schwenkhebels, an dem die Zugstange angelenkt ist, nach oben bewegt wird. Die Zugstange wird dadurch nach oben bewegt, woraufhin die an ihrem freien Ende unterhalb des Gehäusebodens angeordneten Schwenkorgane bzw. ein Schwenkorgan an der Unterseite des Gehäusebodens angreifen können bzw. kann. Das Kraftübertragungsmittel ist beispielsweise ein auf eine Welle aufgewickelter Riemen. Die Welle kann durch einen geeigneten Antrieb in umkehrbare Drehbewegungen versetzt werden, woraufhin der Riemen auf die Welle aufgewickelt wird bzw. von der Welle abgewickelt wird. Dadurch erfolgt ein Schwenken des Schwenkhebels. Andere Kraftübertragungsmittel, wie Ketten, sind gleichfalls verwendbar.

Nach einer Weiterbildung der Erfindung ist vorgesehen, daß eine Gehäusewand des Gehäuses wenigstens eine Durchtrittsöffnung für das Geflügel aufweist, und daß die Abtransporteinrichtung für die gelegten Eier auf der dieser Gehäusewand gegenüberliegenden Seite des Gehäusebodens angeordnet ist. Durch diese Anordnung ist der Gehäuseboden von der Durchtrittsöffnung für das Geflügel ausgehend abwärts zur Abtransporteinrichtung geneigt. Die Abtransporteinrichtung ist dadurch beispielsweise innerhalb des Gehäuses angeordnet. Das hat den Vorteil, daß das Geflügel während der Eiablage mit dem Kopf voran in Richtung der Durchtrittsöffnung des Gehäuses ausgerichtet ist, so daß die Eier bereits im Bereich der Abtransporteinrichtung gelegt werden. Ein vorteilhaft kurzer Abrollweg des Eis ist die Folge. Entsprechend ist verhindert, daß das Geflügel in der Eiablage mit dem Kopf in das Innere des Gehäuses ausgerichtet ist. Dadurch wird die Gefahr von Verletzungen eines ein Ei legenden Tieres durch sogenannte Kloakenpicker wesentlich reduziert. Die Kloake weist in die Legenestanordnung hinein und ist von außen, insbesondere von sich vor der Durchtrittsöffnung aufhaltenden anderen Tieren nicht erreichbar. Aufgrund der nach innen in Richtung der Abtransporteinrichtung ausgerichteten Neigung des Gehäusebodens ist das ein Ei legende Tier mit der Brust erhöht auf dem Gehäuseboden angeordnet. Auch diese Anordnung vermindert vorteilhaft Verletzungen des Tieres.

Die Abtransporteinrichtung der erfindungsgemäßen Legenestanordnung ist vorzugsweise ein bekanntes Förderband. Dieses kann durch eine entsprechende Längenausbildung an mehreren Gehäuseböden mehrerer Gehäuse entlanggeführt sein.

Mehrere Gehäuse können zu einer Gehäusegruppe zusammengefaßt sein, deren jeweils zugeordnete Schwenkhebel der Kippantriebe mit einer gemeinsamen Welle in der Wirkverbindung stehen. Beispielsweise einander gegenüberliegende Gehäuse sind durch Rückwände voneinander trennbar. Eine Rückwand kann beispielsweise oberhalb der Abtransporteinrichtung für die Eier angeordnet sein. Die Anordnung hat den Vorteil, daß die Rückwand verhindert, daß Tiere auf die Abtransporteinrichtung treten und diese verschmutzen.

Eine Gehäusegruppe kann auch mehretagig ausgebildet sein. Schließlich kann vorgesehen sein, daß auf den Gehäuseboden eine Matte aufgelegt ist. Diese Matte bedeckt die separaten Bodenplatten und den zwischen den Bodenplatten ausgebildeten Abstand, insbesondere Spalt. Vorteilhaft wird dadurch ein Gehäuseboden mit einer geschlossenen Oberfläche hergestellt. Die Matte kann beispielsweise elastische Noppen aufweisen. Diese federn aufgrund ihrer Elastizität ein Ei bei dessen Ablage ab, so daß ein harter Aufprall des Eis auf eine Bodenplatte verhindert ist.

Ein Ausführungsbeispiel der Erfindung, aus dem sich weitere erfinderische Merkmale ergeben, ist in der Zeichnung dargestellt. Es zeigen:
- Fig. 1: eine perspektivische Ansicht einer teilweise geöffneten Legenestanordnung für Geflügel mit mehreren Gehäusen, die jeweils durch Gehäusewände voneinander getrennt sind,
- Fig. 2: eine Seitenansicht einer zwei Gehäuse voneinander trennenden Gehäusewand,
- Fig. 3 - 6: Seitenansichten von zwei einander gegenüberliegenden, jeweils zwei Gehäuse voneinantrennenden Gehäusewänden und
- Fig. 7: eine Seitenansicht eines Bauteils der Legenestanordnung.

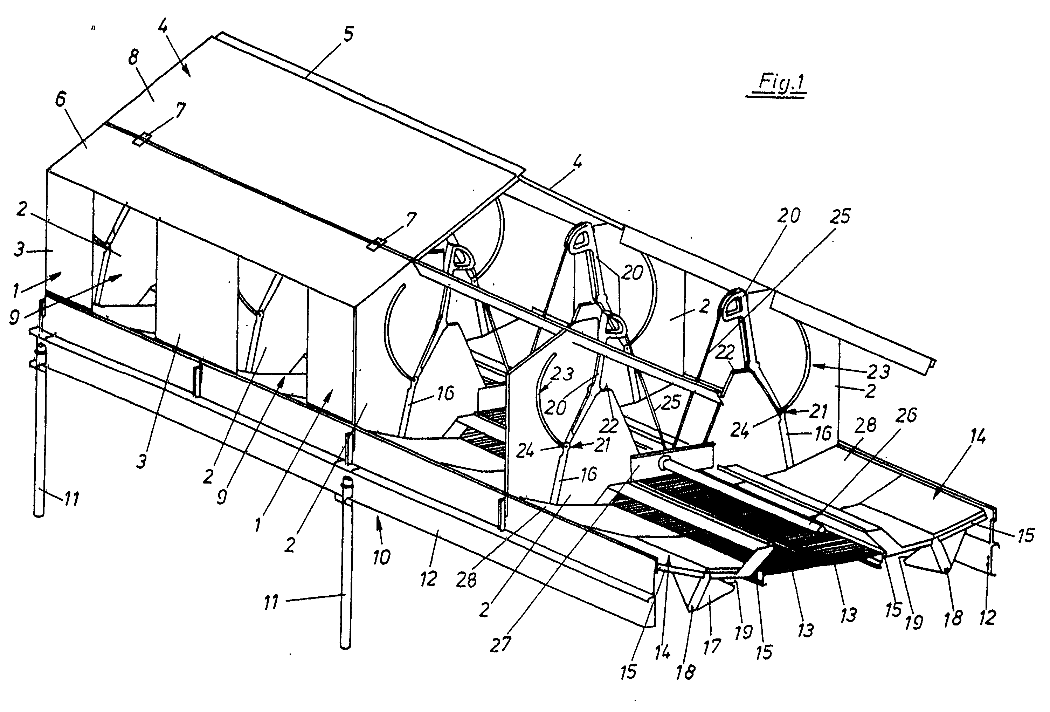

Die Legenestanordnung in Fig. 1 weist mehrere in zwei Reihen nebeneinander angeordnete Gehäuse 1 auf. Jeweils vier Gehäuse 1 sind in einer Reihe angeordnet. Jedes Gehäuse 1 ist durch Gehäuseseitenwände 2, 3 und ein Gehäusedach 4 begrenzt. Zwischen einander gegenüberliegenden Gehäusen 1 angeordnete Gehäuserückwände 31 sind nicht dargestellt. Die in Fig. 1 rechts dargestellten Gehäuse 1 sind ohne die Gehäusewände 3 und das Gehäusedach 4 gezeichnet. Das Gehäusedach 4, das auf jeder Seite des Gehäusedachfirstes 5 angeordnet ist, ist zweigeteilt. Ein Gehäusedachabschnitt 6 ist über Scharniere 7 an dem Gehäusedachabschnitt 8 schwenkbar angelenkt.

Die Gehäusewand 3 weist Durchtrittsöffnungen 9 für das Geflügel auf. Sämtliche Gehäuse 1 sind auf einem Rahmengestell 10 angeordnet. Das Rahmengestell 10 weist auf einem nicht dargestellten Boden aufstellbare Standbeine 11 und mit diesen verbundene Rahmenprofile 12 auf. Auf den Rahmenprofilen 12 liegen die Gehäuse 1 auf.

Jeweils zwei Gehäuse 1 liegen paarweise einander gegenüber. Zwischen den Gehäusen 1 sind zwei Förderbänder 13 als Abtransporteinrichtungen für gelegte Eier angeordnet. Oberhalb der Förderbänder 13 ist eine Welle 26 angeordnet, sie verläuft parallel zur Förderrichtung der Förderbänder 13.

Beidseitig sind den Förderbändern 13 Gehäuseböden 14 der Gehäuse 1 zugeordnet.

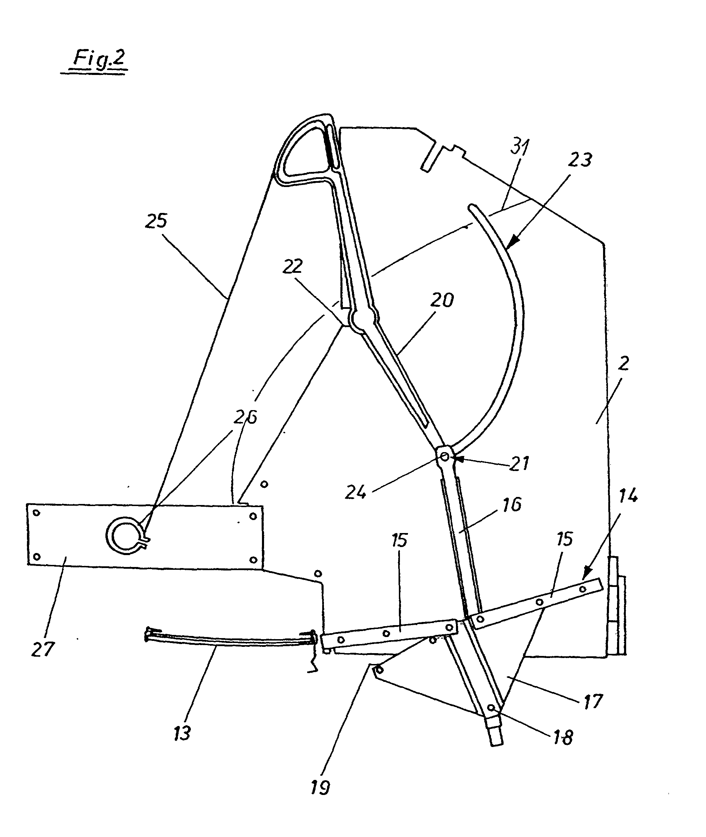

In Fig. 2 ist der Aufbau eines Gehäusebodens 14 sowie dessen Anordnung innerhalb eines Gehäuses 1 dargestellt. Der Gehäuseboden 14 besteht aus zwei Bodenplatten 15. Die Bodenplatten 15 liegen nebeneinander, so daß sie den Gehäuseboden 14 geschlossen ausbilden. Beide Bodenplatten 15 sind zueinander um eine Schwenkachse schwenkbar. Die Schwenkachse ist zwischen den einander zugekehrten Seitenrändern der Bodenplatten 15 angeordnet, so daß die eine Bodenplatte 15 relativ zur anderen Bodenplatte 15 verschwenkbar ist, ohne daß die Ausbildung eines geschlossenen Gehäusebodens 14 aufgehoben wird.

Dem Gehäuseboden 14 ist eine Zugstange 16 zugeordnet. Die Zugstange 16 ist neben dem Gehäuseboden 14 angeordnet, aus Fig. 1 ist erkennbar, daß jedem Gehäuseboden 14 im Bereich beider Stirnränder seiner Bodenplatten 15 jeweils eine Zugstange 16 zugeordnet ist. Das freie Ende der Zugstange 16 ist unterhalb des Gehäusebodens 14 angeordnet. An diesem Ende ist eine dreieckige Auflageplatte 17 um eine Schwenkachse 18 schwenkbar angelenkt. Die Auflageplatte 17 weist eine Auflagekante 19 auf, die an die Unterseiten beider Bodenplatten 15 anlegbar ist. Die Auflageplatte 17 ist an der Zugstange 16 derart angelenkt, daß eine Dreiecksecke in Richtung des freien Endes der Zugstange 16 zeigt. Die Auflagekante 19 ist an der Seite der Auflageplatte 17 angeordnet, die dieser Ecke gegenüberliegt.

In Fig. 2 ist dargestellt, daß die Auflagekante 19 an die Bodenplatte 15, die dem Förderband 13 entfernter ist, angelegt ist. An die zweite Bodenplatte 15 ist die Auflagekante 19 nicht angelegt. Daraus ergeben sich zwei verschiedene Neigungen der Bodenplatten 15 in bezug auf die Ebene des Förderbandes 13. Die dem Förderband 13 entferntere Bodenplatte 15 ist zu dieser Ebene steiler angestellt als die andere Bodenplatte 15. Die verschiedenen Neigungen der Bodenplatten 15 ergeben sich einerseits aus der abgewinkelten Lage der Auflageplatte 17 in bezug auf die Längserstreckung der Zugstange 16. Dadurch ist gewährleistet, daß der der Bodenplatte 15, die dem Förderband 13 weiter entfernt ist, zugeordnete Bereich der Auflagekante 19 an diese Bodenplatte 15 angelegt ist, während der der anderen Bodenplatte 15 zugeordnete Bereich der Auflagekante 19 an diese Bodenplatte 15 noch nicht angelegt ist. Dazu tragen darüber hinaus auch in die Auflagekante 19 eingebrachte Abschrägungen bei. Jeweils ausgehend von der Mitte der Längserstreckung der Auflagekante 19 verlaufen die beiden Abschnitte der Auflagekante 19 nach außen hin schräg abwärts. Aufgrund dieses schrägen Verlaufes entfernt sich die Auflagekante 19 nach außen hin zunehmend von der Unterseite der dem Förderband 13 näher zugeordneten Bodenplatte 15.

Das der Auflageplatte 17 abgekehrte andere Ende der Zugstange 16 ist an dem freien Ende eines Schwenkhebels 20 um eine Achse 21 schwenkbar angelenkt. Der Schwenkhebel 20 ist seinerseits im mittleren Bereich seiner Längserstreckung auf einer Auflageschulter 22 schwenkbar aufgelegt. Die Auflageschulter 22 wird durch die Gehäusewand 2 ausgebildet, die einen entsprechenden Zuschnitt aufweist. In die Gehäusewand 2 ist darüber hinaus ein kreisbogenförmiger Ausschnitt 23 eingebracht, dessen gedachter Mittelpunkt mit der Schwenkachse des Schwenkhebels 20 zusammenfällt. Durch den Ausschnitt 23 ist ein die Schwenkachse 21 bereitstellender Bolzen 24 hindurchgeführt. Der Bolzen 24 verbindet beidseitig der Gehäusewand 2 verlaufende Abschnitte des Schwenkhebels 20 miteinander.

Am anderen Ende des Schwenkhebels 20 greift an diesem ein Riemen 25 als Kraftübertragungsmittel an. Der Riemen ist auf die Welle 26 aufgewickelt. Die Welle 26 wird von einem Tragprofil 27 gehalten, das seinerseits mit zwei einander gegenüberliegenden Gehäusewänden 2 über geeignete Befestigungsmittel haltend verbunden ist. Oberhalb des Gehäusebodens 14 ist eine bogenförmig aufwärts verlaufende Rückwand 31 angeordnet. Diese verhindert, daß Tiere das Förderband betreten.

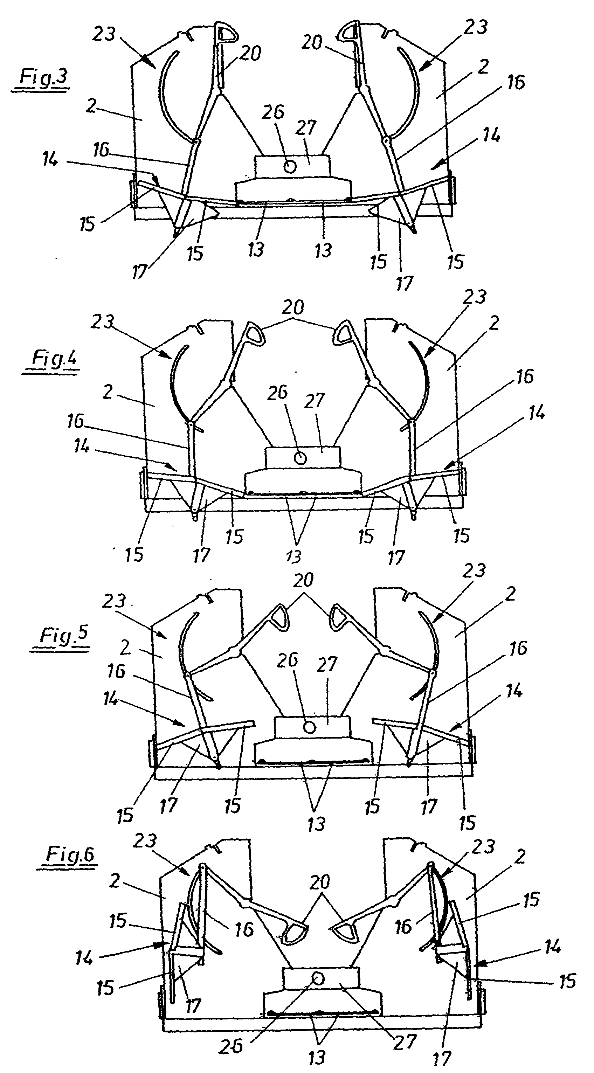

Fig. 3 bis 6 zeigen, daß bei einem Verschwenken des Schwenkhebels 20 ein Kippen des Schwenkbodens 14 um eine Kippachse erfolgt. Die Kippachse ist dem der Durchtrittsöffnung 9 in der Gehäusewand 3 angenäherten Rand der Bodenplatte 15 zugeordnet, die von dem Förderband 13 entfernter ist. Die Riemen 25 und die Rückwände 31 sind in diesen Fig. zur besseren Veranschaulichung nicht dargestellt.

In Fig. 3 sind die Schwenkhebel 20 in ihrer Ausgangs-Schwenkstellung. In dieser weisen die Bodenplatten 15 voneinander verschiedene Neigungen auf. Die von dem zugeordneten Förderband 13 entferntere Bodenplatte 15 ist steiler als die andere Bodenplatte 15 angestellt.

In Fig. 4 wird durch ein Schwenken der Schwenkhebel 20 eine Anhebung jeder Zugstange 16 bewirkt. Dabei wird auch die am freien Ende der Zugstange 16 angelenkte Auflageplatte 17 angehoben, wobei sich die Auflagekante 19 der Auflageplatte 17 jeweils auch an die Bodenplatte 15 anlegt, die dem Förderband 13 näher angeordnet ist. Durch diese Anlage ist bewirkt, daß sich die Neigung dieser Bodenplatten 15 in bezug auf die Ebene der Förderbänder 13 vergrößert. Aufgrund der in der Auflagekante 19 vorgesehenen Abschrägungen weist auch die Bodenplatte 15, die den Förderbändern 13 jeweils entfernter ist, noch eine Neigung in Richtung des Förderbandes 13 auf.

In Fig. 5 und 6 sind weitere Kippzustände der Gehäuseböden 14 dargestellt. In diesen Kippzuständen ist kein Abrollen von auf den Bodenplatten 15 befindlichen Eiern auf die Förderbänder 13 mehr möglich, weil die Bodenplatten 15 nicht mehr in Richtung der Förderbänder 13 geneigt sind. Mit den Gehäuseböden 14 erfolgt vielmehr ein Verschluß der Durchtrittsöffnungen 9 in den Gehäusewänden 3.

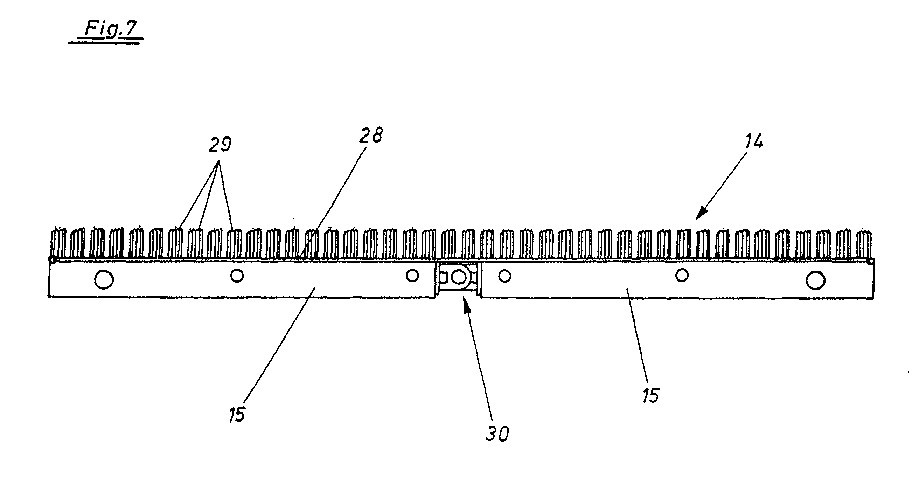

In Fig. 7 ist gezeigt, daß auf den aus den Bodenplatten 15 ausgebildeten Gehäuseboden 14 eine Matte 28 aufgelegt ist. Die Matte 28 weist nach oben vorstehende Noppen 29 auf. Fig. 7 zeigt weiterhin, daß die Bodenplatten 15 durch ein Scharnier 30 miteinander verbunden sind.

## Patentansprüche

1. Legenestanordnung für Geflügel, umfassend wenigstens ein Gehäuse (1) mit zumindestens eine Durchtrittsöffnung (9) für das Geflügel aufweisenden Gehäusewänden und mit wenigstens einem Gehäuseboden (14) und umfassend eine an einem Gehäusebodenrand entlanggeführte Abtransporteinrichtung (13) für gelegte Eier, wobei der Gehäuseboden eine Neigung in Richtung der Abtransporteinrichtung aufweist,
**dadurch gekennzeichnet,**
**daß** der Gehäuseboden (14) aus wenigstens zwei Bodenplatten (15) ausgebildet ist, die zueinander um eine parallel zur Längserstreckung der Abtransporteinrichtung ausgerichtete und in der Ebene des Gehäusebodens (14) verlaufende Schwenkachse schwenkbar sind, und daß wenigstens ein eine separate Schwenkung jeder Bodenplatte (15) bewirkendes Schwenkorgan vorgesehen ist.

2. Legenestanordnung nach Anspruch 1, **dadurch gekennzeichnet, daß** die Bodenplatten (15) miteinander durch wenigstens ein Scharnier (30) oder dergleichen Gelenkmittel verbunden sind.

3. Legenestanordnung nach Anspruch 2, **dadurch gekennzeichnet, daß** für jede Bodenplatte (15) ein Schwenkorgan vorgesehen ist.

4. Legenestanordnung nach Anspruch 2, **dadurch gekennzeichnet, daß** für zwei einander benachbarte Bodenplatten (15) ein gemeinsames Schwenkorgan vorgesehen ist.

5. Legenestanordnung nach einem der vorhergehenden Ansprüche, **dadurch gekennzeichnet, daß** der Gehäuseboden (14) um eine Kippachse kippbar gelagert ist, daß die Kippachse einem einer Durchtrittsöffnung (9) angenäherten Rand des Gehäusebodens (14) zugeordnet ist und daß ein Kippantrieb vorgesehen ist.

6. Legenestanordnung nach Anspruch 5, **dadurch gekennzeichnet, daß** der Kippantrieb eine seitlich am Gehäuseboden (14) vorbeigeführte Zugstange (16) umfaßt, deren freies Ende unterhalb des Gehäusebodens (14) angeordnet ist, und daß das Schwenkorgan am freien Ende der Zugstange (16) angeordnet ist.

7. Legenestanordnung nach Anspruch 4 und Anspruch 6, **dadurch gekennzeichnet, daß** das Schwenkorgan als etwa dreieckige Auflageplatte (17) ausgebildet ist und am freien Ende der Zugstange (16) unterhalb des Gehäusebodens schwenkbar angelenkt ist, und daß eine Seite der dreieckigen Auflageplatte (16) als Auflagekante (19) für zwei Bodenplatten (15) ausgebildet ist.

8. Legenestanordnung nach Anspruch 7, **dadurch gekennzeichnet, daß** die Auflagekante (19) ausgehend von der Mitte ihrer Längserstreckung beidseitig Abschrägungen aufweist.

9. Legenestanordnung nach Anspruch 8, **dadurch gekennzeichnet, daß** die Abschrägungen jeweils kontinuierlich ausgebildet sind.

10. Legenestanordnung nach einem der vorhergehenden Ansprüche, **dadurch gekennzeichnet, daß** der Kippantrieb einen Schwenkhebel (20) umfaßt, an dessen einem freien Ende die Zugstange (16) schwenkbar angelenkt ist und an dessen anderem freien Ende ein Kraftübertragungsmittel angreift.

11. Legenestanordnung nach Anspruch 10, **dadurch gekennzeichnet, daß** das Kraftübertragungsmittel ein auf eine Welle (26) aufgewickelter Riemen (25) ist.

12. Legenestanordnung nach einem der vorhergehenden Ansprüche, **dadurch gekennzeichnet, daß** eine Gehäusewand (3) des Gehäuses (1) wenigstens eine Durchtrittsöffnung (9) für das Geflügel aufweist und daß die Abtransporteinrichtung für die gelegten Eier auf der dieser Gehäusewand (3) gegenüberliegenden Seite des Gehäusebodens (14) angeordnet ist.

13. Legenestanordnung nach einem der vorhergehenden Ansprüche, **dadurch gekennzeichnet, daß** die Abtransporteinrichtung ein Förderband (13) ist.

14. Legenestanordnung nach einem der vorhergehenden Ansprüche, **dadurch gekennzeichnet, daß** mehrere Gehäuse (1) zu einer Gehäusegruppe zusammengefaßt sind, deren jeweils zugeordnete Schwenkhebel (20) von einer gemeinsamen Welle (26) angetrieben sind.

15. Legenestanordnung nach einem der vorhergehenden Ansprüche, **dadurch gekennzeichnet, daß** auf den Gehäuseboden (14) eine Matte (28) aufgelegt ist.

## Claims

1. Laying-nest arrangement for poultry, comprising at least one housing (1) with housing walls, having at least one through-passage opening (9) for the poultry, and with at least one housing floor (14), and comprising a device (13) which is intended for removing laid eggs and is guided along a border of the housing floor, the housing floor being inclined in the direction of the removal device, **characterized in that** the housing floor (14) is formed from at least two floor panels (15) which can be pivoted in relation to one another about a pivot axis which is oriented parallel to the longitudinal extent of the removal device and runs in the plane of the housing floor (14), and **in that** there is provided at least one pivoting element which causes each floor panel (15) to be pivoted separately.

2. Laying-nest arrangement according to Claim 1, **characterized in that** the floor panels (15) are connected to one another by at least one hinge (30) or similar articulation means.

3. Laying-nest arrangement according to Claim 2, **characterized in that** a pivoting element is provided for each floor panel (15).

4. Laying-nest arrangement according to Claim 2,
**characterized in that** a common pivoting element is provided for two adjacent floor panels (15).

5. Laying-nest arrangement according to one of the preceding claims, **characterized in that** the housing floor (14) is mounted such that it can be tilted about a tilting axis, **in that** the tilting axis is assigned to an edge of the housing floor (14) which is in the vicinity of a through-passage opening (9), and **in that** a tilting drive is provided.

6. Laying-nest arrangement according to Claim 5, **characterized in that** the tilting drive comprises a connecting rod (16) which is guided laterally past the housing floor (14) and of which the free end is arranged beneath the housing floor (14), and **in that** the pivoting element is arranged at the free end of the connecting rod (16).

7. Laying-nest arrangement according to Claims 4 and 6, **characterized in that** the pivoting element is designed as an approximately triangular bearing plate (17) and is articulated in a pivotable manner at the free end of the connecting rod (16), beneath the housing floor, and **in that** one side of the triangular bearing plate (16) is designed as a bearing edge (19) for two floor panels (15).

8. Laying-nest arrangement according to Claim 7, **characterized in that**, starting from the centre of its longitudinal extent, the bearing edge (19) has bevels on both sides.

9. Laying-nest arrangement according to Claim 8, **characterized in that** the bevels are each designed continuously.

10. Laying-nest arrangement according to one of the preceding claims, **characterized in that** the tilting drive comprises a pivoting lever (20), at one free end of which the connecting rod (16) is articulated in a pivotable manner and at the other free end of which a force-transmission means acts.

11. Laying-nest arrangement according to Claim 10, **characterized in that** the force-transmission means is a belt (25) wound up onto a shaft (26).

12. Laying-nest arrangement according to one of the preceding claims, **characterized in that** a housing wall (3) of the housing (1) has at least one through-passage opening (9) for the poultry, and **in that** the device for removing the laid eggs is arranged on that side of the housing floor (14) which is located opposite said housing wall (3).

13. Laying-nest arrangement according to one of the preceding claims, **characterized in that** the removal device is a conveying belt (13).

14. Laying-nest arrangement according to one of the preceding claims, **characterized in that** a plurality of housings (1) are combined to form a housing group, of which respectively associated pivoting levers (20) are driven by a common shaft (26).

15. Laying-nest arrangement according to one of the preceding claims, **characterized in that** a mat (28) is positioned on the housing floor (14).

## Revendications

1. Pondoir pour volailles, comprenant au moins un boîtier (1) avec des parois de boîtier présentant au moins une ouverture de passage (9) pour la volaille et avec au moins un fond de boîtier (14), et comprenant un dispositif d'évacuation (13), guidé le long d'un bord du fond du boîtier, pour les oeufs pondus, le fond du boîtier présentant une inclinaison dans la direction du dispositif d'évacuation,
**caractérisé**
**en ce que** le fond de boîtier (14) est constitué d'au moins deux plaques de fond (15) qui peuvent pivoter l'une par rapport à l'autre autour d'un axe de pivotement parallèle à l'étendue longitudinale du dispositif d'évacuation et s'étendant dans le plan du fond de boîtier (14), et en ce qu'il est prévu au moins un organe de pivotement opérant un pivotement séparé de chaque plaque de fond (15).

2. Pondoir selon la revendication 1, **caractérisé en ce que** les plaques de fond (15) sont reliées entre elles par au moins une charnière (30) ou des moyens d'articulation similaires.

3. Pondoir selon la revendication 2, **caractérisé en ce qu'**il est prévu un organe de pivotement pour chaque plaque de fond (15).

4. Pondoir selon la revendication 2, **caractérisé en ce qu'**il est prévu un organe de pivotement commun pour deux plaques de fond (15) voisines l'une de l'autre.

5. Pondoir selon l'une des revendications précédentes, **caractérisé en ce que** le fond de boîtier (14) est monté de manière à pouvoir basculer autour d'un axe de basculement, **en ce que** l'axe de basculement est associé à un bord du fond de boîtier (14), proche d'une ouverture de passage (9) et **en ce qu'**il est prévu un dispositif d'entraînement en basculement.

6. Pondoir selon la revendication 5, **caractérisé en ce que** le dispositif d'entraînement en basculement comprend une barre de traction (16) qui passe latéralement devant le fond de boîtier (14), et dont l'extrémité libre est disposée au-dessous du fond de boîtier (14) et **en ce que** l'organe de pivotement est disposé à l'extrémité libre de la barre de traction (16).

7. Pondoir selon la revendication 4 et la revendication 6, **caractérisé en ce que** l'organe de pivotement est réalisé en tant que plaque de support (17) triangulaire et est articulé pivotant à l'extrémité libre de la barre de traction (16), au-dessous du fond de boîtier, et **en ce qu'**un côté de la plaque de support (16) triangulaire est réalisé en tant que bord de support (19) pour deux plaques de fond (15).

8. Pondoir selon la revendication 7, **caractérisé en ce que** le bord de support (19) présente, partant du milieu de son étendue longitudinale, des chanfreins des deux côtés.

9. Pondoir selon la revendication 8, **caractérisé en ce que** les chanfreins sont réalisés chacun de manière continue.

10. Pondoir selon l'une des revendications précédentes, **caractérisé en ce que** le dispositif d'entraînement en basculement comprend un levier de pivotement (20) à une extrémité libre duquel est articulée pivotante la barre de traction (16), et à l'autre extrémité libre duquel agit un moyen de transmission des forces.

11. Pondoir selon la revendication 10, **caractérisé en ce que** le moyen de transmission des forces est une courroie (25) enroulée sur un arbre (26).

12. Pondoir selon l'une des revendications précédentes, **caractérisé en ce qu'**une paroi (3) du boîtier (1) présente au moins une ouverture de passage (9) pour la volaille et **en ce que** le dispositif d'évacuation des oeufs pondus est disposé sur le côté du fond de boîtier (14) opposé à cette paroi de boîtier (3).

13. Pondoir selon l'une des revendications précédentes, **caractérisé en ce que** le dispositif de transport est un convoyeur à bande (13).

14. Pondoir selon l'une des revendications précédentes, **caractérisé en ce que** plusieurs boîtiers (1) sont réunis en un groupe de boîtiers dont les leviers de pivotement (20) respectifs sont entraînés par un arbre commun (26).

15. Pondoir selon l'une des revendications précédentes, **caractérisé en ce qu'**une natte (28) est placée sur le fond de boîtier (14).
